# FASCICULE DE BREVET EUROPEEN

(11) **EP 4 168 838 B1**
(45) Date de publication et mention de la délivrance du brevet: **07.02.2024**
(21) Numéro de dépôt: 21715944.1
(22) Date de dépôt: 08.03.2021
(51) Int. Cl.: G02B 6/42, G02B 6/122, G02B 6/30

(54) **PUCE PHOTONIQUE, PROCEDE D'ASSEMBLAGE D'UNE PIÈCE OPTIQUE ET DE CETTE PUCE, COMPOSANT PHOTONIQUE EN RESULTANT**
PHOTONISCHER CHIP, VERFAHREN ZUR MONTAGE EINES OPTISCHEN TEILS UND DES PHOTONISCHEN CHIPS UND DARAUS RESULTIERENDES PHOTONISCHES BAUELEMENT
PHOTONIC CHIP, METHOD FOR ASSEMBLING AN OPTICAL PART AND SAID PHOTONIC CHIP, AND PHOTONIC COMPONENT RESULTING THEREFROM

(30) Priorité: 22.06.2020 FR 2006481
(43) Date de publication de la demande: 26.04.2023
(73) Titulaire: Scintil Photonics, 38040 Grenoble Cedex 9 (FR)
(72) Inventeur: MENEZO, Sylvie, 38500 VOIRON (FR)
(74) Mandataire: IP Trust
(86) Numéro de dépôt international: PCT/FR2021/050386
(87) Numéro de publication internationale: WO 2021/260280

(56) Documents cités:
- JP-A- 2011 191 647
- US-A1- 2016 334 590
- US-B1- 6 654 523

## Description

### DOMAINE DE L'INVENTION

Le domaine de l'invention est celui de la photonique, et plus particulièrement l'invention concerne un composant photonique comprenant une puce photonique intégrée assemblée à au moins une pièce optique.

### ARRIERE PLAN TECHNOLOGIQUE DE L'INVENTION

Les puces photoniques intégrées sont des composants à base de matériaux semi-conducteurs, fabriquées par des technologies usuellement employées dans le domaine de la microélectronique et des microsystèmes. Ces puces peuvent mixer des fonctionnalités optiques produites par des dispositifs optiques actifs (lasers, modulateurs, photo-détecteurs...) et passifs (guides d'onde, coupleurs, filtres...) et des fonctionnalités produites par des dispositifs électroniques conventionnels. A titre d'illustration, un composant photonique peut mettre en oeuvre une puce photonique intégrée comprenant un émetteur-récepteur et couplée à une fibre optique d'un réseau de télécommunication.

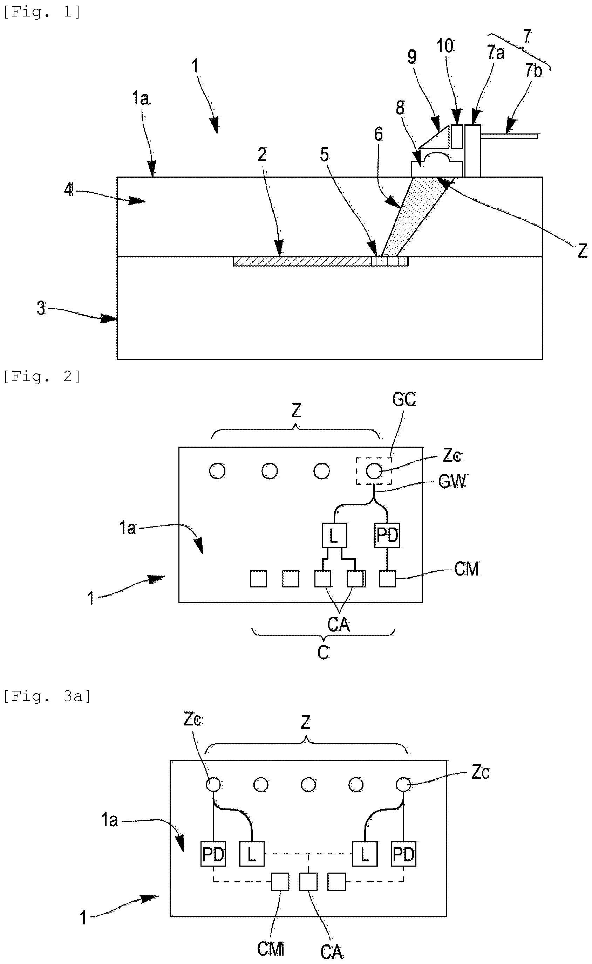

Dans une implémentation particulière représentée sur la figure 1, la puce 1 comprend une pluralité de guides d'onde 2 formés dans un substrat 3 par exemple en silicium. Les guides sont disposés dans un plan parallèle à une surface 1a dite « principale » de la puce 1, ce plan étant enfoui sous une couche d'encapsulation 4, par exemple en dioxyde de silicium. Des coupleurs optiques 5 également enfouis sont respectivement disposés aux extrémités des guides d'ondes 2. Les guides d'onde 2 distribuent les modes optiques entre les coupleurs 5 et les différents dispositifs actifs (lasers, modulateurs, photo-détecteurs...) et/ ou passifs (filtres, diviseurs ou combineurs de puissance optique...) de la puce. Les coupleurs permettent de propager sous la forme de faisceaux 6 les modes optiques se propageant dans les guides 2 depuis/vers des zones d'entrées-sorties Z optiques disposées sur la face principale 1a de la puce 1, à travers la couche d'encapsulation. Ces zones sont généralement disposées en lignes ou en matrice sur cette face.

Pour former le composant optique, on peut équiper la puce 1 de pièces optiques 7, 8, 9, 10 additionnelles permettant notamment de coupler les zones d'entrées-sorties Z de la puce 1 à un réseau de fibres optiques 7. Les fibres du réseau sont retenues par un bloc 7a, par exemple par l'intermédiaire de rainures en V formées dans ce bloc, dans un arrangement permettant de coupler chaque zone d'entrée-sortie Z de la puce à une fibre 7b du réseau. Cet arrangement peut être en ligne ou en matrice, et le bloc 7a est assemblé à la puce photonique de manière à mettre en vis-à-vis optique les fibres 7b et les zones d'entrées-sorties Z d'où émergent/arrivent les faisceaux. On peut également prévoir d'assembler d'autres pièces optiques sur la puce, telle qu'un bloc de lentilles 8 visant à ajuster la taille des faisceaux des entrées/sorties z à la taille des modes des fibres 7b, un prisme 9 pour réorienter les faisceaux et faciliter l'assemblage du bloc 7a, ou encore un isolateur optique 10. Un exemple de telles combinaisons est décrit dans le document US20190146164.

Les puces photoniques sont usuellement fabriquées collectivement sur une plaquette de semi-conducteur, typiquement en silicium. Et certaines pièces optiques sont respectivement assemblés aux puces avant leur découpe de la plaquette (assemblage du type « puce à plaquette ») ou après leur découpe (assemblage du type « puce à puce »), typiquement par un équipement automatique d'insertion de composants (« pick and place » selon la terminologie anglo-saxonne). Le document précité rappelle que les réseaux de fibres peuvent être disposés sur la puce photonique en mettant en oeuvre un alignement passif ou actif de ces deux éléments entre eux.

Dans l'approche passive, des marques d'alignement sont respectivement disposées sur les puces, et sur le réseau de fibres. Ces marques sont repérées par l'équipement d'insertion de composants qui assemble le réseau de fibres sur la puce en cherchant à les aligner visuellement, au mieux possible. L'équipement fixe ensuite les deux éléments ensemble à l'aide d'une matière adhésive, par exemple une colle époxy. Les équipements d'insertion de l'état de la technique atteignent une précision d'assemblage de l'ordre de +/-5 microns, parfois un peu moins, mais sans être capable d'atteindre une précision moindre que +/- 1 micron. Lorsque l'on cherche à assembler un réseau de fibres portant des fibres dont la taille de mode est inférieure ou égale à 10 microns pour que celles-ci se couplent à entrées/sorties de coupleurs dont la taille est du même ordre de grandeur, cette précision de l'ordre de +/- 5 microns est insuffisante. On cherche généralement une précision inférieure à 10% de la taille de mode pour assurer un couplage optique suffisant, et donc inférieure à +/- 1 micron.

L'approche active d'alignement permet de surmonter ce problème de précision d'alignement du réseau de fibre. Selon cette approche, au moins une zone d'entrée et au moins une zone de sortie de la puce sont reliées entre elles par un guide d'onde dont les extrémités sont munies de coupleurs, respectivement associés à la zone d'entrée et à la zone de sortie. On peut de la sorte propager un rayonnement de la zone d'entrée optique vers la zone de sortie optique. Ces zones d'entrées-sorties « d'alignement » de la puce photonique sont dédiées pour permettre un assemblage de grande précision d'une pièce optique fibrée, tel qu'un réseau de fibres, ils n'ont généralement pas d'autres utilités en fonctionnement normal de la puce. Pour assembler un réseau de fibres, on relie donc une fibre de ce réseau, destinée à se coupler optiquement avec une zone d'entrée d'alignement de la puce, à une source optique externe à la puce. Similairement, on relie une fibre optique du réseau de fibres à assembler, destinée à se coupler optiquement avec une zone de sortie d'alignement de la puce photonique, à un puissance mètre optique. La source et le puissance mètre peuvent faire partie de l'équipement d'insertion. Cet équipement manipule le réseau de fibres de manière à rechercher sa position relative vis-à-vis de la puce qui permette de maximiser la puissance optique mesurée par le puissance mètre alors que la source fournit une certaine puissance fixe, cette position optimale étant celle mettant les zones d'entrées-sorties d'alignement en vis-à-vis des fibres respectivement reliées à la source et au puissance mètre de l'équipement d'insertion. On peut avec cet équipement assurer un positionnement à +/- 0,1 micron des deux éléments.

Cette approche nécessite que la pièce optique à aligner avec la puce photonique soit « fibrée », c'est-à-dire préalablement alignée et assemblée avec un réseau de fibres. Dans le cas contraire, il est nécessaire de se rabattre sur l'approche passive dont la précision est limitée.

Les documents US 2016/334590 et US 6 654523 portent sur l'alignement de fibres optiques avec composants optiques. Le document JP 2011 191647 A concerne l'alignement actif d'un composant de guide d'onde passif avec des blocs de lentilles à l'aide d'une source laser externe et d'un wattmètre optique.

### OBJET DE L'INVENTION

Un but principal de l'invention est de proposer un procédé d'assemblage selon la revendication indépendante 1. Plus particulièrement, le procédé vise à permettre un assemblage précis d'une pièce optique sur une puce photonique, la pièce optique n'étant pas nécessairement fibrée. Un autre but de l'invention est de proposer une puce photonique configurée pour permettre la mise en oeuvre de ce procédé d'assemblage en vue de préparer un composant photonique selon la revendication indépendante 6, dont les différents éléments sont alignés entre eux avec une très grande précision.

D'autres modes de réalisation sont fournis par les revendications dépendantes.

### BREVE DESCRIPTION DE L'INVENTION

En vue de la réalisation du but principal, l'objet de l'invention propose un procédé d'assemblage d'une pièce optique et d'une puce photonique, la pièce optique comprenant une pluralité de voies optiques à aligner avec une pluralité de zones d'entrées-sorties disposées sur une face dite « principale » de la puce photonique, le procédé d'assemblage comprenant les étapes suivantes :
- fournir une puce photonique comprenant au moins une source lumineuse, au moins un photo détecteur et, parmi la pluralité de zones d'entrées-sorties, au moins une entrée-sortie d'alignement associée optiquement à la source lumineuse et au photo détecteur de la puce ;
- fournir la pièce optique équipée d'un réflecteur sur au moins une voie dite « d'alignement » choisie parmi la pluralité de voies optiques, la voie d'alignement étant destinée à être mise en correspondance avec la zone d'entrée-sortie d'alignement de la puce photonique ;
- activer la source lumineuse de la puce photonique pour produire un faisceau lumineux d'alignement au niveau de la zone d'entrée-sortie d'alignement et mesurer le signal fourni par le photo-détecteur de la puce photonique ;
- aligner activement la puce photonique et la pièce optique l'une par rapport à l'autre en exploitant la mesure du signal fourni par le photo-détecteur.

Selon d'autres caractéristiques avantageuses et non limitatives de l'invention, prises seules ou selon toute combinaison techniquement réalisable :
- la puce photonique comprend un plot d'alimentation et un plot de mesure respectivement reliés à la source lumineuse et au photo détecteur, et le procédé comprend une étape visant à contacter le plot d'alimentation pour activer la source lumineuse et à contacter le plot de mesure pour mesurer le signal fourni par le photo-détecteur de la puce photonique ;
- la pièce optique est choisie dans la liste formée de : un bloc de lentille, un réseau de fibres, un rotateur faraday de polarisation, un prisme, un isolateur, un assemblage entre deux au moins de ces pièces optiques ;
- le réflecteur est une couche d'un matériau réfléchissant déposée sur la pièce optique ;
- un rotateur de polarisation de Faraday est disposé dans un chemin optique du faisceau d'alignement entre la puce photonique et le réflecteur ;
- la source lumineuse et le photo détecteur sont associés optiquement à l'entrée-sortie d'alignement par l'intermédiaire d'au moins un guide d'onde et d'un coupleur optique disposé à une extrémité du guide d'onde.

Selon un autre aspect, l'objet de l'invention propose une puce photonique comprenant une pluralité de zones d'entrées-sorties disposées sur une face dite « principale », la puce photonique comprenant une source lumineuse, un photo détecteur et, parmi la pluralité d'entrées-sorties, au moins une entrée-sortie d'alignement associée optiquement à la source lumineuse et au photo détecteur de la puce.

Selon d'autres caractéristiques avantageuses et non limitatives de l'invention, prises seules ou selon toute combinaison techniquement réalisable :
- la source lumineuse et le photo détecteur sont associés optiquement à l'entrée-sortie d'alignement par l'intermédiaire d'au moins un guide d'onde et d'un coupleur optique disposé à une extrémité du guide d'onde ;
- le guide d'onde est un diviseur de puissance;
- le coupleur optique est un coupleur optique surfacique séparateur de polarisation et la puce comprend un premier guide d'onde entre la source lumineuse et le coupleur optique, et un deuxième guide d'onde, distinct du premier, entre le photo détecteur et le coupleur optique ;
- la puce photonique comprend un premier guide d'onde entre la source lumineuse et un premier coupleur optique, et un deuxième guide d'onde, distinct du premier, entre le photo détecteur et un deuxième coupleur optique ;
- la puce photonique comprend un plot d'alimentation électrique pour activer la source lumineuse et un plot de mesure pour reporter le signal fourni par le photo détecteur ;
- la puce photonique comprend une pluralité d'entrée-sortie d'alignement ;
- la surface principale correspond à une tranche de la puce ;
- la source lumineuse est monolithiquement intégrée.

Selon un autre aspect encore, l'invention propose un composant photonique comprenant une puce photonique telle que proposée ci-dessus et au moins une pièce optique comprenant une voie optique d'alignement parmi une pluralité de voies optiques, la pièce optique étant assemblée à la surface principale de la puce photonique de sorte que la voie optique d'alignement soit disposée en correspondance optique avec la zone d'entrée sortie d'alignement de la puce.

Selon d'autres caractéristiques avantageuses et non limitatives de cet aspect de l'invention, prises seules ou selon toute combinaison techniquement réalisable :
- la pièce optique est équipée d'un réflecteur disposé sur la voie d'alignement ;
- la pièce optique est choisie dans la liste formée de : un bloc de lentille, un réseau de fibres, un rotateur de polarisation, un prisme, un isolateur, un assemblage entre deux au moins de ces pièces optiques ;
- la pièce optique est un assemblage comprenant un rotateur de faraday et un bloc de lentille ;
- la puce est configurée pour produire, au niveau de la zone d'entrée sortie d'alignement un faisceau présentant une taille de mode déterminée, et la pièce optique est assemblée sur la puce photonique avec une précision inférieure ou égale à 10% de la taille de mode déterminée.

### BREVE DESCRIPTION DES FIGURES

D'autres caractéristiques et avantages de l'invention ressortiront de la description détaillée de l'invention qui va suivre en référence aux figures annexées sur lesquelles :
- La figure 1 représente une puce photonique de l'état de la technique ;
- La figure 2 représente schématiquement une face principale d'une puce photonique conforme à l'invention revendiquée;
- Les figures 3a à 3c représentent d'autres configurations de puces photoniques conformes à l'invention revendiquée;
- La figure 4 représente une pièce optique pouvant être assemblée à une puce photonique selon un procédé d'assemblage conforme à l'invention revendiquée;
- La figure 5 représente une architecture alternative d'une puce photonique conforme à l'invention revendiquée;
- La figure 6 représente schématiquement un procédé d'assemblage mettant en oeuvre l'architecture alternative de la figure 5 ;
- Les figures 7 et 8 représentent schématiquement d'autres modes de mise en oeuvre.

### DESCRIPTION DETAILLEE DE L'INVENTION

### Puce photonique

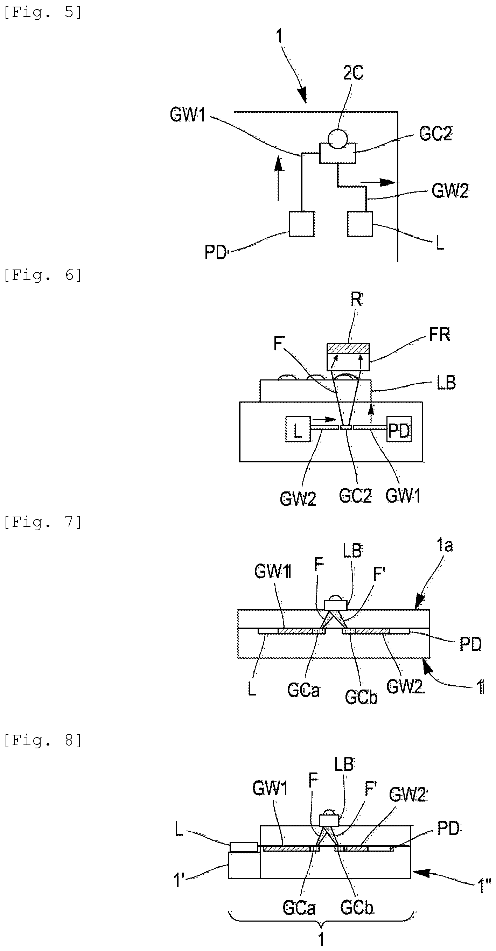

En référence à la figure 2, une puce photonique 1 est fabriquée collectivement, par des techniques conventionnelles du domaine, sur une plaquette de matériaux, par exemple une plaquette à base de silicium. La puce photonique 1 incorpore des dispositifs actifs tels que des lasers, des démodulateurs, des photos détecteurs associés à des dispositifs passifs tels que des guides d'onde, des coupleurs optiques permettant à la puce 1 d'être pleinement fonctionnelle. Comme cela a été présenté dans la partie introductive de cette demande, ces dispositifs sont optiquement reliés entre eux et vers des zones d'entrée/sortie Z agencées sur une surface 1a de la puce 1, désignée « surface principale » dans la suite de cette demande. Il n'est pas nécessaire que tous ces éléments soient intégrés monolithiquement à la puce 1, et certains d'entre eux, notamment des sources lumineuses, peuvent être rapportés sur une puce photonique et couplés aux autres éléments de cette puce, comme cela sera illustré en relation avec la description de la figure 8. On désignera d'une manière générale par « puce photonique » la puce 1 éventuellement complétée de ces éléments optiques rapportés (notamment une source lumineuse ou un photodetecteur) la rendant au moins en partie fonctionnelle.

Les zones d'entrée/sortie correspondent à des portions de la surface principale 1a de la puce 1 au niveau desquelles émergent ou sont injectés des faisceaux lumineux. La surface principale 1a peut être la surface supérieure de la puce 1 sur laquelle sont disposés des plots d'interconnexions électriques C, comme cela est représenté sur la figure 2, ou une tranche de la puce 1. Par souci de visibilité de la figure 2, on a omis sur celle-ci de représenter l'ensemble des dispositifs fonctionnels de la puce 1 et cette figure se contente de représenter schématiquement les éléments de la puce 1 nécessaire ou utile à la bonne compréhension de la présente invention.

L'ensemble des zones d'entrée sortie Z (plus simplement désignées « zones d'E/S » dans la suite de cette description) est ici agencé en ligne et comprend une zone d'E/S d'alignement Zc. La puce photonique 1 comporte, enfouis sous une couche d'encapsulation, une source lumineuse L et un photo détecteur PD associés optiquement à la zone d'E/S d'alignement Zc. A cet effet, un guide d'onde GW, dans l'exemple représenté un diviseur de puissance 1 vers 2, est également disposé dans le plan enfoui, pour connecter la source L et le photo détecteur PD à un coupleur optique surfacique GC, ici disposé au droit de la zone d'E/S d'alignement Zc.

Ce coupleur GC permet de propager à travers la couche d'encapsulation et vers la zone d'E/S d'alignement Zc, sous la forme d'un faisceau lumineux, le rayonnement issu de la source de lumière L. Inversement, le coupleur GC permet de coupler au photo détecteur PD un faisceau lumineux incident se projetant sur la zone d'E/S d'alignement Zc. Dans l'exemple de la figure 2, le guide d'onde GW prend la forme d'un diviseur optique, présentant une première extrémité associée au coupleur optique GC et deux deuxièmes extrémités respectivement associées à la source lumineuse L et au photo détecteur PD. Dans cette configuration, un rayonnement lumineux émis par la source L se propage donc dans le guide d'onde GW puis à travers la couche d'encapsulation vers la zone d'E/S d'alignement Zc. Inversement, un faisceau lumineux incident se projetant au niveau de la zone d'E/S d'alignement se couple au guide d'onde GW par l'intermédiaire du coupleur en réseau GC, et le rayonnement se propage dans le guide d'onde GW à la fois vers la source lumineuse L et vers le photo détecteur PD. D'une manière générale, l'ensemble des éléments associés optiquement à la zone d'E/S d'alignement Zc forme, en combinaison, un circuit d'alignement.

Poursuivant la description de la figure 2, la puce photonique 1 prise en illustration comprend également une pluralité de plots de connexion électrique C, cinq plots de connexion sur cette figure. Les plots C sont affleurants à la surface principale 1a de la puce 1, ce qui permet de connecter électriquement cette puce 1 à d'autres éléments du composant photonique, par exemple par l'intermédiaire de fils de câblage. Les plots de connexion C sont reliés par l'intermédiaire de via et de pistes conductrices enfouies aux dispositifs actifs de la puce, par exemple pour les alimenter électriquement ou pour fournir/recevoir un signal électrique à moduler/démoduler optiquement dans le cas où la puce photonique présente de telles fonctions d'émission-réception. Parmi les plots de connexion C et dans le cadre de la présente description, on trouve au moins un premier plot CA, dit d'alimentation, permettant d'alimenter électriquement la source lumineuse L et de l'activer pour qu'elle émette effectivement un rayonnement lumineux qui s'injecte dans le guide d'onde GW. La puce 1 comprend également au moins un second plot de connexion, dit de mesure CM, permettant de reporter à la surface principale 1a de la puce 1 le signal électrique établi par le photo détecteur PD. Ce signal est représentatif de la puissance du rayonnement qui se propage dans le guide d'onde GW, en provenance du coupleur optique GC.

Dans l'exemple représenté, la puce photonique 1 est munie d'une unique zone d'E/S d'alignement Zc associée optiquement à une source lumineuse L et à un photo détecteur PD. Mais de manière avantageuse, on pourra prévoir de munir la puce 1 pour des raisons qui seront rendues apparentes dans la suite de cette description, d'au moins deux de zones d'E/S d'alignement Zc, chaque zone Zc étant associée à une source lumineuse L et à un photo détecteur PD. On a ainsi représenté schématiquement sur la figure 3a, une puce photonique 1 présentant une pluralité de zones d'E/S Z agencées en ligne sur la face principale 1a de cette puce 1. Deux zones d'E/S d'alignement Zc forment respectivement les zones d'E/S d'extrémité de la ligne, et chacune de ces deux zones est associée à une source lumineuse L et à un photo détecteur PD. On note que, dans un arrangement alternatif à celui de la figure 3a, une unique source lumineuse L peut produire un rayonnement lumineux guidé vers la pluralité de zones d'E/S d'alignement Zc, par exemple par l'intermédiaire d'un diviseur de puissance. La puce 1 comprend un plot d'alimentation CA permettant d'alimenter et d'activer la ou les deux sources L, et un plot de mesure CM permettant de reporter un signal électrique combinant les signaux fournis par les deux photo détecteurs PD. On peut envisager bien entendu d'autres configurations selon lesquelles chaque source lumineuse L est alimentée par un plot d'alimentation CA dédié, et/ou chaque photo détecteur reporte sur un plot de mesure CM également dédié son signal détecté.

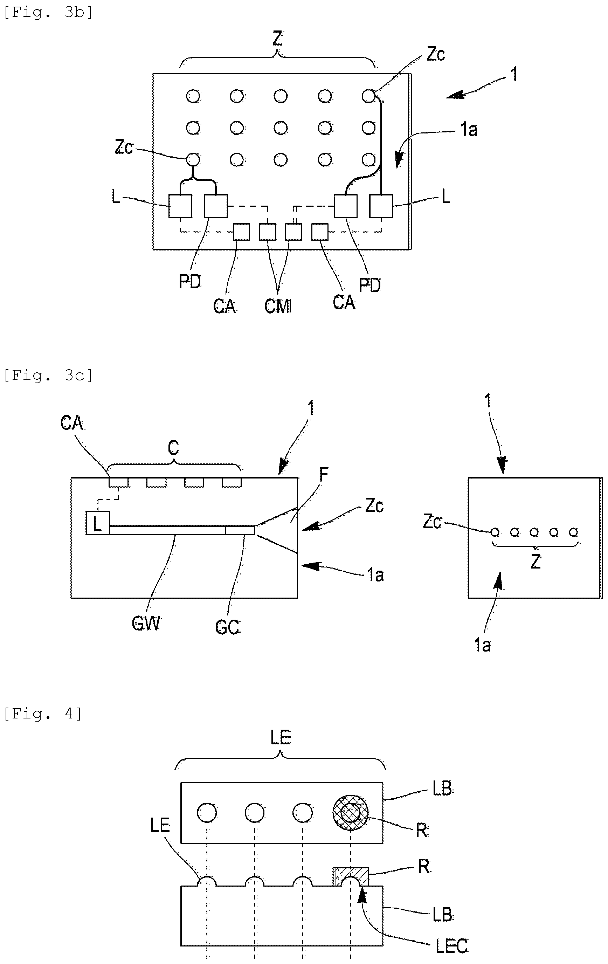

La figure 3b présente une autre configuration présentant une pluralité de zones d'E/S d'alignement Zc. Dans cette configuration, les zones d'E/S Z sont agencées en matrice sur la surface principale 1a de la puce 1, et les zones d'E/S d'alignement Zc sont ici diagonalement opposés l'une à l'autre dans cette matrice.

On cherche d'une manière générale, lorsque plusieurs zones d'E/S d'alignement Zc sont fournies, à les éloigner les unes des autres. Elles ne sont donc pas agencées à la surface principale juxtaposée l'une à l'autre.

La figure 3c présente une coupe transversale et une vue de la face principale 1a d'une configuration dans laquelle les zones d'entrée/sortie Z sont disposées sur une tranche de la puce 1, cette tranche formant alors la surface principale 1a de cette puce. Les plots de connexion électrique C sont dans ce cas généralement disposés sur la surface supérieure de la puce 1, différente de la surface principale 1a. On retrouve bien dans cette configuration, une source lumineuse L, un photo-détecteur PD (non visible sur la figure), un guide d'onde GW et un coupleur GC, permettant de propager sous la forme d'un faisceau F le mode optique se propageant dans le guide GW depuis/vers la zone d'entrée/sortie d'alignement Zc. On peut également prévoir dans cette configuration une pluralité de zones d'entrée/sortie d'alignement Zc.

On note que pour permettre la mise en oeuvre du procédé d'assemblage dont la description suit, on peut prévoir de préalablement assembler la puce 1 à une embase, et relier par câblage les plots de connexions électriques C à des plots correspondants de cette embase.

### Procédé d'assemblage

On présente maintenant un procédé d'assemblage d'une pièce optique et de la puce 1 qui vient d'être décrite. Ce procédé d'assemblage fait partie d'un procédé de fabrication d'un composant photonique qui tire profit des zones d'E/S d'alignement et des circuits d'alignement intégrés à la puce 1, qui viennent d'être décrits.

La pièce optique est un bloc de lentilles LB, c'est-à-dire un bloc portant au moins une lentille, représentée schématiquement en vue de dessus et en coupe sur la figure 4 (les lentilles du bloc de lentilles peuvent être différentes les unes des autres ou identiques). Cette pièce LB comprend une pluralité de voies, ici passant par chaque lentille LE du bloc LB, qui sont destinées à être mises en correspondance optique avec la pluralité de zones d'E/S Z de la puce photonique 1 au cours du procédé d'assemblage. On retrouve donc au moins une voie d'alignement, définie ici par une lentille d'alignement LEc, destinée à être mise en correspondance optique avec la zone d'E/S d'alignement Zc de la puce 1. On note qu'il n'est pas nécessaire que chaque zone d'E/S de la puce photonique soit mise en correspondance avec une voie distincte de la pièce optique. On peut notamment prévoir qu'une pluralité de zones d'E/S se projettent toutes dans une unique voie de la pièce optique, par exemple une lentille de grande dimension du bloc LB.

Par mise « en correspondance optique » on signifie donc qu'une voie optique de la pièce optique est alignée avec une zone d'E/S de la puce photonique 1 de sorte qu'un faisceau lumineux se propageant à travers l'ensemble subisse des pertes optiques aussi réduites que possible. De préférence, on cherche un alignement à mieux de 10% de la taille de mode du faisceau qui est destiné à se propager dans une voie.

Pour permettre cela, la lentille d'alignement et chaque lentille d'alignement dans la cas où une pluralité de lentilles d'alignement est prévue, est configurée pour réfléchir un rayonnement lumineux susceptible d'être émis par la source lumineuse L. A cet égard, le coefficient de réflexion de la lentille d'alignement considérée peut être supérieur à 0,1 %, avantageusement supérieur à 1 %, encore plus avantageusement supérieur à 5 %.

Selon une autre alternative, on peut prévoir de munir la voie d'alignement, et chaque voie d'alignement dans le cas où une pluralité de voies est prévue, d'un réflecteur R constitué d'un matériau réfléchissant à la longueur d'onde des rayonnements émis par la source lumineuse L. Sur le bloc lentille LB de la figure 4, le réflecteur R est formé d'une couche métallique disposée directement sur, et en contact avec, la lentille d'alignement LEc de la voie.

L'assemblage de cette pièce optique LB est réalisé par alignement actif de la puce photonique 1 à l'aide du circuit d'alignement, par exemple à l'aide d'un équipement d'insertion de l'état de la technique, en activant la source lumineuse L de la puce photonique 1 pour générer un faisceau d'alignement qui se propage et se réfléchit sur l'une des faces de la lentille d'alignement et en mesurant le signal fourni par le photo détecteur PD de cette puce 1.

Dans une étape préliminaire du procédé d'assemblage, l'équipement d'insertion, ou un équipement complémentaire relié à cet équipement d'insertion, positionne des pointes conductrices d'une sonde de mesure sur les plots de connexion C de la puce 1, et notamment sur les plots d'alimentation CA et de mesure CM. L'équipement est configuré pour fournir par l'intermédiaire des contacts formés sur ces plots CA, CM, une énergie d'alimentation à la source lumineuse L et de relever sur le plot de mesure CM le signal électrique délivré par le photo détecteur PD. L'alimentation est fournie, et la mesure est relevée, de manière continue pendant l'étape d'alignement actif qui suit.

Au cours de cette étape suivante d'alignement, l'équipement d'insertion positionne « grossièrement » la pièce optique LB vis-à-vis de la puce dans une position d'assemblage visant à mettre en correspondance la pluralité de voies de la pièce optique avec la pluralité de zones d'E/S Z de la puce 1. Cet assemblage grossier peut être aidé par des marques d'alignement formées sur la puce 1 et/ou sur la pièce optique comme cela a été décrit en introduction de cette demande.

Le rayonnement émis par la source lumineuse L se propage dans le guide d'onde GW vers le coupleur optique GC et émerge de la puce 1 au niveau de la zone d'E/S d'alignement Zc. Une partie de ce faisceau émergeant se propage dans la voie d'alignement de la pièce optique. L'alignement étant grossier et imparfait, le couplage entre la puce 1 et la pièce optique l'est également et donc une partie seulement du faisceau émergeant se propage effectivement dans la voie d'alignement. Cette partie est réfléchie par la lentille d'alignement (ou par le réflecteur disposé sur la lentille si ce dernier est considéré) et réinjectée, partiellement également, dans la puce photonique 1 au niveau de la zone d'E/S d'alignement Zc pour se coupler au guide d'onde GW. Une partie du rayonnement couplé est dirigé vers le photo détecteur PD, et la puissance optique reçue par ce dispositif forme un signal de mesure qui est reporté sur le plot de mesure CM. On comprend que plus l'alignement entre la zone d'E/S d'alignement Zc et la voie d'alignement est précis, plus la puissance réfléchie vers le photo détecteur PD sera importante. Le signal électrique fourni par ce dispositif est donc représentatif de la qualité de l'alignement des deux éléments. On comprend également que pour assurer un positionnement précis de la pièce optique vis-à-vis de la puce 1, il est avantageux de disposer de plusieurs voies d'alignement et de plusieurs circuits d'alignement dans la puce 1, afin de pouvoir prendre en considération les écarts d'alignement en translation et en rotation.

Dans tous les cas, l'équipement d'insertion peut exploiter le signal fourni par le photo détecteur PD pour activement aligner avec précision les deux éléments entre eux. Pour ce faire, l'équipement déplace finement la pièce optique (et/ou la puce 1) en translation selon des directions variées dans le plan défini par la surface principale de la puce 1 et en rotation autour d'un axe perpendiculaire à la surface principale 1a tout en observant l'évolution du signal fourni par le photo détecteur PD et prélevé sur le plot de mesure CM. La position de fixation de la pièce optique sur la puce photonique 1 est celle qui maximise la valeur de ce signal. Cette position déterminée, la pièce optique peut être fermement fixée sur la puce 1 par exemple à l'aide d'une colle époxy, comme cela est bien connu en soi.

A l'issue de cette étape, qui peut être éventuellement renouvelée si une pluralité de pièces optiques doit être assemblée à la puce photonique 1, on dispose d'un composant photonique comprenant la puce photonique 1 et la pièce optique, le bloc de lentilles LB dans l'exemple décrit, la pièce optique étant assemblée à la surface principale 1a de la puce photonique 1 de sorte que la voie optique d'alignement soit disposée en correspondance optique avec la zone d'E/S d'alignement Zc de la puce 1. Cela conduit naturellement à placer l'ensemble des voies optiques de la pièce optique en correspondance avec les zones d'E/S Z de la puce. La qualité de cette correspondance peut être améliorée en prévoyant plusieurs circuits d'alignement dans la puce 1, et une pièce optique présentant autant de voies d'alignement muni de leurs réflecteurs, comme cela a été évoqué précédemment. On peut ainsi atteindre une précision d'alignement bien inférieure à 10% de la taille du mode du faisceau lumineux produit par la source L au niveau de la zone d'E/S d'alignement Zc.

L'approche qui vient d'être présentée n'est nullement limitée à l'assemblage du bloc de lentilles LB qui a été pris en exemple. Elle peut s'appliquer à toute pièce optique à assembler à la puce photonique 1 pour la compléter et former un composant photonique fonctionnel. Il peut notamment s'agir, outre le bloc de lentille, d'un réseau de fibres, d'un rotateur faraday de polarisation, d'un prisme, d'un isolateur, d'un polariseur. Il peut s'agir d'une pluralité de ces pièces optiques préassemblées entre elles. On notera que certaines de ces pièces (prise, rotateur, ...) ne nécessitent pas d'alignement précis vis-à-vis de la puce 1 ou des autres pièces optiques, et dans ce cas l'assemblage de ces pièces pourra être fait sans exploiter le circuit d'alignement de la puce 1, par exemple par assemblage passif. D'une manière générale, un procédé d'assemblage conforme à l'invention peut mixer plusieurs approches d'assemblage, certaines pièces optiques pouvant être assemblées à la puce 1 sans tirer profit du circuit d'alignement.

Dans tous les cas où l'on souhaitera tirer profit du circuit d'alignement de la puce 1, on prévoira considérer une lentille d'alignement susceptible de réfléchir en partie le rayonnement lumineux émis par la source lumineuse L. De manière alternative, et tel que décrit précédemment dans l'énoncé, on pourra prévoir de disposer un réflecteur R sur la voie d'alignement de la pièce optique, afin de pouvoir mettre en oeuvre le procédé d'assemblage qui vient d'être présenté. Dans le cas d'un réseau de fibres, le réflecteur R pourra par exemple être disposé dans une rainure en V du bloc retenant les fibres, en remplacement d'une telle fibre ou en y plaçant une fibre comportant un réflecteur à son extrémité.

On note que ce procédé d'assemblage n'est nullement limité à une pièce optique fibrée, comme c'est le cas dans le procédé d'assemblage actif de l'état de la technique, ce qui est très avantageux.

Lorsque plusieurs pièces optiques sont à assembler sur une même puce 1, on pourra prévoir plusieurs circuits d'alignement pour permettre de mettre en oeuvre successivement le procédé d'assemblage pour chacune de ces pièces, chaque circuit d'alignement étant dédié à l'assemblage d'une pièce. C'est notamment le cas lorsque la lentille d'alignement configurée pour réfléchir, ou lorsqu'un réflecteur est formé directement sur la pièce à assembler et n'est pas ôté à l'issue de la fixation de la pièce optique sur la puce.

Lorsqu'un réflecteur est considéré, on peut envisager que ce dernier ne soit pas formé définitivement sur la pièce optique. Il peut ainsi s'agir d'une pâte réflectrice disposée sur la pièce pour se conformer à cette pièce, par exemple à la forme de la lentille LEc de la voie d'alignement lorsque cette pièce est un bloc de lentille LB. La pâte peut être éliminée de la pièce optique à l'issue du procédé d'assemblage. Dans ce cas, on pourra réemployer un même circuit d'alignement pour aligner successivement plusieurs pièces optiques.

En référence aux figures 5 et 6, on présente maintenant une puce photonique 1 présentant une architecture alternative à celle proposée dans la figure 2, dans laquelle la propagation du rayonnement lumineux F réfléchi vers la source L peut dans certains cas affecter son fonctionnement. Pour éviter cela, on pourra choisir d'associer la zone d'E/S d'alignement Zc à la source lumineuse L et au photo détecteur PD par deux guides d'onde distincts GW1, GW2, se rejoignant au niveau d'un coupleur optique surfacique séparateur de polarisation GC2. Dans cette architecture alternative, un premier guide d'onde GW1 associe optiquement le photo détecteur PD au coupleur GC2, et un second guide d'onde GW2, distinct du premier, associe la source lumineuse L à ce coupleur GC2. Ce dernier permet de propager sélectivement les rayonnements lumineux entre les deux guides d'onde GW1 et GW2 et la zone d'E/S d'alignement Zc. Un tel coupleur à réseau 2D est notamment décrit dans la publication de Taillaert, Dirk, et al. "A Compact Two-Dimensional Grating Coupler Used as a Polarization Splitter." IEEE PHOTONICS TECHNOLOGY LETTERS 15.9 (2003): 1249. Il est constitué d'une superposition de réseaux de couplage 1D et chaque polarisation orthogonale d'un rayonnement qui se projette sur ce coupleur est dirigé vers des guides d'onde distincts GW1, GW2. Lorsque le procédé d'assemblage exploite une telle configuration de puce 1, et pour permettre le couplage effectif du rayonnement réfléchi par la lentille d'alignement dans le guide d'onde associé au photo détecteur, on prévoira d'insérer dans le chemin optique du faisceau d'alignement un rotateur de polarisation de Faraday FR, comme cela est représenté sur la figure 6. La lumière issue de la source lumineuse L est dans une première polarisation TE, elle est tournée de 45° à travers le rotateur, réfléchie par la lentille d'alignement la pièce optique en cours d'assemblage, puis tournée à nouveau sur son chemin retour pour présenter une seconde polarisation TM perpendiculaire à la première polarisation TE. La lumière réfléchie dans la seconde polarisation TM est dirigée vers le photo-détecteur PD grâce au coupleur optique surfacique séparateur de polarisation GC2. Dans le cas d'un couplage par la tranche, cette tranche formant alors la surface principale 1a, on pourra prévoir un séparateur de faisceau pour permettre de rediriger la lumière réfléchie dans la seconde polarisation vers le photo-détecteur PD.

Les figures 7 et 8 représentent des schémas de principes illustrant d'autres modes de mise en oeuvre. Sur le mode de mise en oeuvre de la figure 7, un premier coupleur GCa à l'extrémité d'un premier guide d'onde GW1 dirige un mode provenant d'une source L monolithiquement intégrée à la puce 1 vers les zones d'E/S par l'intermédiaire d'un faisceau F. Ce faisceau F présente un angle d'incidence non nul vis-à-vis de ces zones Z, c'est-à-dire qu'il se projette sur ces zones selon une direction qui n'est pas perpendiculaire au plan principal 1a. On a prévu un second coupleur GCb, distinct du premier, pour collecter le faisceau réfléchi F' et le propager dans un second guide d'onde GW2 associé au photo détecteur PD. On a également représenté sur cette figure 7 un bloc de lentille LB disposé sur la surface principale 1a en vis-à-vis des zones d'E/S.

La figure 8 propose une configuration similaire à celle de la figure 7 dans laquelle la puce photonique 1 comporte une source lumineuse L non monolithiquement intégrée. La puce photonique est donc formée d'une première puce 1' comportant la source lumineuse assemblée à une seconde puce 1" comportant les autres éléments optiques, tels que décrits en référence à la figure 7.

Bien entendu l'invention n'est pas limitée aux modes de mise en oeuvre décrits et on peut y apporter des variantes de réalisation sans sortir du cadre de l'invention tel que défini par les revendications.

## Revendications

1. Procédé d'assemblage d'une pièce optique (LB) et d'une puce photonique (1), la pièce optique (LB), formée par un bloc de lentilles pourvue d'une pluralité de lentilles et formant une pluralité de voies optiques à aligner avec une pluralité de zones d'entrées-sorties (Z) disposées sur une face dite principale (1a) de la puce photonique (1), le procédé d'assemblage comprenant les étapes suivantes :
- fournir la puce photonique (1) comprenant au moins une source lumineuse (L), au moins un photo détecteur (PD) et, parmi la pluralité de zones d'entrées-sorties (Z), au moins une entrée-sortie d'alignement (Zc) associée optiquement à la au moins une source lumineuse (L) et au au moins un photo détecteur (PD) de la puce photonique (1);
- fournir la pièce optique (LB) dont au moins une lentille d'alignement formant une voie d'alignement choisie parmi la pluralité de voies optiques, la voie d'alignement étant destinée à être mise en correspondance avec la au moins une zone d'entrée-sortie d'alignement (Zc) de la puce photonique (1), la au moins une lentille d'alignement étant configurée pour, lorsqu'elle est en correspondance avec la au moins une entrée-sortie d'alignement, réfléchir, au moins en partie, vers le au moins un photo-détecteur (PD) un faisceau lumineux susceptible d'être produit par la au moins une source lumineuse (L) ;
- activer la au moins une source lumineuse (L) de la puce photonique (1) pour produire un faisceau lumineux d'alignement au niveau de la au moins une zone d'entrée-sortie d'alignement (Zc) et mesurer un signal fourni par le au moins un photo-détecteur (PD) de la puce photonique (1) ;
- aligner activement la puce photonique (1) et la pièce optique (LB) l'une par rapport à l'autre en exploitant la mesure du signal fourni par le au moins un photo-détecteur (PD).

2. Procédé d'assemblage selon la revendication précédente dans lequel la puce photonique (1) comprend, un plot d'alimentation (CA) et un plot de mesure (CM) respectivement reliés à la au moins une source lumineuse (L) et au au moins un photo détecteur (PD), et le procédé comprend une étape visant à contacter le plot d'alimentation (CA) pour activer la au moins une source lumineuse (L) et à contacter le plot de mesure (CM) pour mesurer le signal fourni par le au moins un photo-détecteur (PD) de la puce photonique (1).

3. Procédé d'assemblage selon l'une des revendications précédentes dans lequel la au moins une lentille d'alignement comprend un réflecteur (R) agencé pour réfléchir au moins en partie, vers le au moins un photo-détecteur (PD) un faisceau lumineux susceptible d'être produit par la au moins une source lumineuse (L) lorsque la au moins une lentille d'alignement est en correspondance avec la au moins une entrée - sortie d'alignement, avantageusement, le réflecteur comprend une couche d'un matériau réfléchissant déposée sur la au moins une lentille d'alignement.

4. Procédé d'assemblage selon l'une des revendications précédentes dans lequel un rotateur de polarisation de Faraday (FR) est disposé dans un chemin optique du faisceau lumineux d'alignement entre la puce photonique (1) et le réflecteur (R).

5. Procédé d'assemblage selon l'une des revendications précédentes, dans lequel la au moins une source lumineuse (L) et le au moins un photo détecteur (PD) sont associés optiquement à la au moins une entrée-sortie d'alignement (Zc) par l'intermédiaire d'au moins un guide d'onde (GW ;GW1, GW2) et d'un coupleur optique (GC1 ; GC2) disposé à une extrémité d'au moins un guide d'onde (GW ;GW1, GW2).

6. Composant photonique qui comprend :
- une puce photonique (1) comprenant une pluralité de zones d'entrées-sorties (Z) disposées sur une face dite principale (1a), la puce photonique (1) comprenant une source lumineuse (L), un photo détecteur (PD) et, parmi la pluralité d'entrées-sorties (Z), au moins une entrée-sortie d'alignement (Zc) associée optiquement à la source lumineuse (L) et au photo détecteur (PD) de la puce (1);
- au moins une pièce optique (LB) disposée sur la face principale (1a), ladite pièce optique (LB) comprenant un bloc de lentilles pourvue d'une pluralité de lentilles et formant une pluralité de voies optiques chacune en correspondance avec une entrée-sortie (Z) de la pluralité de zones d'entrées-sorties (Z), le composant photonique étant **caractérisé par** au moins une lentille d'alignement parmi la pluralité de lentilles en correspondance avec une voie optique, dite voie d'alignement, la au moins une lentille d'alignement étant configurée pour réfléchir, au moins en partie, vers le photo-détecteur (PD) un faisceau lumineux susceptible d'être produit par la source lumineuse (L).

7. Composant photonique selon la revendication précédente dans lequel la source lumineuse (L) et le photo détecteur (PD) sont associés optiquement à l'au moins une entrée-sortie d'alignement (Zc) par l'intermédiaire d'au moins un guide d'onde (GW ;GW1, GW2) et d'au moins un coupleur optique (GC1 ; GC2 ; GCa, GCb) disposé à une extrémité de l'au moins un guide d'onde (GW ;GW1, GW2).

8. Composant photonique selon la revendication précédente dans laquelle le au moins un guide d'onde (GW) est un diviseur de puissance.

9. Composant photonique selon la revendication 7 dans lequel l'au moins un coupleur optique (GC2) est un coupleur optique surfacique séparateur de polarisation et la puce photonique (1) comprend un premier guide d'onde (GW1) entre le photo détecteur (PD) et le coupleur optique surfacique séparateur de polarisation (GC2), et un deuxième guide d'onde (GW2), distinct du premier, entre la source lumineuse (L) et le coupleur optique surfacique séparateur de polarisation (GC2).

10. Composant photonique selon la revendication 7 dans lequel la puce photonique (1) comprend un premier guide d'onde (GW1) entre la source lumineuse (L) et un premier coupleur optique (GCa), et un deuxième guide d'onde (GW2), distinct du premier (GW1), entre le photo détecteur (PD) et un deuxième coupleur optique (GCb).

11. Composant photonique selon l'une des revendications 6 à 10, dans lequel la puce photonique (1) comprend un plot d'alimentation électrique (CA) pour activer la source lumineuse (L) et un plot de mesure (CM) pour reporter le signal fourni par le photo détecteur (PD).

12. Composant photonique selon l'une des revendications 6 à 11, dans lequel la puce photonique (1) comprend une pluralité d'entrée-sortie d'alignement (Zc).

13. Composant photonique selon l'une des revendications 6 à 12 dans laquelle la surface principale (1a) correspond à une tranche de la puce (1).

14. Composant photonique selon l'une des revendications 6 à 12 dans laquelle la source lumineuse (L) est monolithiquement intégrée.

15. Composant photonique selon l'une des revendications 6 à 14, dans lequel l'au moins une pièce optique (LB) est équipée d'un réflecteur (R) disposé sur la voie d'alignement.

16. Composant photonique selon l'une des revendications 6 à 15, dans lequel l'au moins une pièce optique est un assemblage comprenant un rotateur de faraday et le bloc de lentilles.

17. Composant photonique selon l'une des revendications 6 à 16 selon lequel la puce photonique (1) est configurée pour produire, au niveau de la zone d'entrée sortie d'alignement (Z) un faisceau présentant une taille de mode déterminée, et l'au moins une pièce optique (LB) est assemblée sur la puce photonique avec une précision inférieure ou égale à 10% de la taille de mode déterminée.

## Patentansprüche

1. Verfahren zum Zusammensetzen eines optischen Bauteils (LB) und eines Photonenchips (1), wobei das optische Bauteil (LB), das durch einen Linsenblock ausgebildet wird, mit einer Vielzahl von Linsen versehen ist und eine Vielzahl von optischen Wegen ausbildet, die an einer Vielzahl von Zonen (Z) mit Ein-Ausgängen ausgerichtet werden sollen, die auf einer sogenannten Hauptfläche (1a) des Photonenchips (1) angeordnet sind, das Verfahren zum Zusammensetzen umfassend die folgenden Schritte:
- Bereitstellen des Photonenchips (1), umfassend mindestens eine Lichtquelle (L), mindestens einen Photodetektor (PD) und, unter der Vielzahl von Zonen (Z) mit Ein-Ausgängen, mindestens einen Ausrichtungsein-Ausgang (Zc), der der mindestens einen Lichtquelle (L) und dem mindestens einen Photodetektor (PD) des Photonenchips (1) zugeordnet ist;
- Bereitstellen des optischen Bauteils (LB), dessen mindestens eine Ausrichtungslinse einen Ausrichtungsweg ausbildet, der aus der Vielzahl von optischen Wegen ausgewählt ist, wobei der Ausrichtungsweg dazu bestimmt ist, mit der mindestens eine Zone (Zc) mit Ausrichtungsein-Ausgang des Photonenchips (1) in Entsprechung gebracht zu werden, wobei die mindestens eine Ausrichtungslinse konfiguriert ist zum, wenn sie in Entsprechung mit dem mindestens einen Ausrichtungsein-Ausgang ist, Reflektieren, mindestens teilweise, in Richtung des mindestens einen Photodetektors (PD), eines Lichtbündels, das geeignet ist, durch die mindestens eine Lichtquelle (L) produziert zu werden;
- Aktivieren der mindestens einen Lichtquelle (L) des Photonenchips (1) zum Produzieren eines Ausrichtungslichtbündels an der mindestens einen Zone (Zc) mit Ausrichtungsein-Ausgang und Messen eines Signals, das durch den mindestens einen Photodetektor (PD) des Photonenchips (1) bereitgestellt wird;
- aktives Ausrichten des Photonenchips (1) und des optischen Bauteils (LB) in Bezug aufeinander, indem die Messung des Signals genutzt wird, das durch den mindestens einen Photodetektor (PD) bereitgestellt wird.

2. Verfahren zum Zusammensetzen nach dem vorstehenden Anspruch, wobei der Photonenchip (1) ein Versorgungspad (CA) und ein Messpad (CM) umfasst, die jeweils mit der mindestens einen Lichtquelle (L) und dem mindestens einen Photodetektor (PD) verbunden sind, und das Verfahren einen Schritt umfasst, der es anstrebt, das Versorgungspad (CA) zum Aktivieren der mindestens einen Lichtquelle (L) zu kontaktieren und das Messpad (CM) zum Messen des Signals zu kontaktieren, das durch den mindestens einen Photodetektor (PD) des Photonenchips (1) bereitgestellt wird.

3. Verfahren zum Zusammensetzen nach einem der vorstehenden Ansprüche, wobei die mindestens eine Ausrichtungslinse einen Reflektor (R) umfasst, der zum Reflektieren mindestens teilweise, in Richtung des mindestens einen Photodetektors (PD), eines Lichtbündels eingerichtet ist, das geeignet ist, durch die mindestens eine Lichtquelle (L) produziert zu werden, wenn die mindestens eine Ausrichtungslinse in Entsprechung mit dem mindestens einen Ausrichtungsein-Ausgang ist, vorzugsweise wobei der Reflektor eine Schicht aus einem reflektierenden Material umfasst, die auf der mindestens einen Ausrichtungslinse abgelagert ist.

4. Verfahren zum Zusammensetzen nach einem der vorstehenden Ansprüche, wobei ein Faraday-Polarisationsrotator (FR) in einem optischen Pfad des Ausrichtungslichtbündels zwischen dem Photonenchip (1) und dem Reflektor (R) angeordnet ist.

5. Verfahren zum Zusammensetzen nach einem der vorstehenden Ansprüche, wobei die mindestens eine Lichtquelle (L) und der mindestens eine Photodetektor (PD) über mindestens einen Wellenleiter (GW; GW1, GW2) und einen optischen Koppler (GC1; GC2), der an einem Ende mindestens eines Wellenleiters (GW; GW1, GW2) angeordnet ist, mit dem mindestens einen Ausrichtungsein-Ausgang (Zc) optisch verbunden sind.

6. Photonenkomponente, die umfasst:
- einen Photonenchip (1), umfassend eine Vielzahl von Zonen (Z) mit Ein-Ausgängen, die auf einer sogenannten Hauptfläche (1a) angeordnet sind, der Photonenchip (1) umfassend eine Lichtquelle (L), einen Photodetektor (PD) und, unter der Vielzahl von Ein-Ausgängen (Z), mindestens einen Ausrichtungsein-Ausgang (Zc), der der Lichtquelle (L) und dem Photodetektor (PD) des Chips (1) optisch zugeordnet ist;
- mindestens ein optisches Bauteil (LB), das auf der Hauptfläche (1a) angeordnet ist, das optische Bauteil (LB) umfassend einen Linsenblock, der mit einer Vielzahl von Linsen versehen ist und eine Vielzahl von optischen Wegen ausbildet, wobei jeder mit einem Ein-Ausgang (Z) der Vielzahl von Zonen (Z) mit Ein-Ausgängen in Entsprechung ist, wobei die Photonenkomponente **gekennzeichnet ist durch** mindestens eine Ausrichtungslinse unter der Vielzahl von Linsen in Entsprechung mit einem optischen Weg, dem sogenannten Ausrichtungsweg, wobei die mindestens eine Ausrichtungslinse zum Reflektieren, mindestens teilweise, in Richtung des Photodetektors (PD), eines Lichtbündels konfiguriert ist, das geeignet ist, durch die Lichtquelle (L) produziert zu werden.

7. Photonenkomponente nach dem vorstehenden Anspruch, wobei die mindestens eine Lichtquelle (L) und der Photodetektor (PD) über mindestens einen Wellenleiter (GW; GW1, GW2) und mindestens einen optischen Koppler (GC1; GC2; GCa, GCb), der an einem Ende des mindestens einen Wellenleiters (GW; GW1, GW2) angeordnet ist, mit dem mindestens einen Ausrichtungsein-Ausgang (Zc) optisch verbunden sind.

8. Photonenkomponente nach dem vorstehenden Anspruch, wobei der mindestens eine Wellenleiter (GW) ein Leistungsteiler ist.

9. Photonenkomponente nach Anspruch 7, wobei der mindestens eine optische Koppler (GC2) ein polarisationstrennender optischer Oberflächenkoppler ist und der Photonenchip (1) einen ersten Wellenleiter (GW1) zwischen dem Photodetektor (PD) und dem polarisationstrennenden optischen Oberflächenkoppler (GC2) und einen zweiten Wellenleiter (GW2), der sich von dem ersten unterscheidet, zwischen der Lichtquelle (L) und dem polarisationstrennenden optischen Oberflächenkoppler (GC2) umfasst.

10. Photonenkomponente nach Anspruch 7, wobei der Photonenchip (1) einen ersten Wellenleiter (GW1) zwischen der Lichtquelle (L) und einem ersten optischen Koppler (GCa) und einen zweiten Wellenleiter (GW2), der sich von dem ersten (GW1) unterscheidet, zwischen dem Photodetektor (PD) und einem zweiten optischen Koppler (GCb) umfasst.

11. Photonenkomponente nach einem der Ansprüche 6 bis 10, wobei der Photonenchip (1) ein Elektrizitätsversorgungspad (CA) zum Aktivieren der Lichtquelle (L) und ein Messpad (CM) zum Übertragen des Signals umfasst, das durch den Photodetektor (PD) bereitgestellt wird.

12. Photonenkomponente nach einem der Ansprüche 6 bis 11, wobei der Photonenchip (1) eine Vielzahl von Ausrichtungsein-Ausgängen (Zc) umfasst.

13. Photonenkomponente nach einem der Ansprüche 6 bis 12, wobei die Hauptoberfläche (1a) einem Abschnitt des Chips (1) entspricht.

14. Photonenkomponente nach einem der Ansprüche 6 bis 12, wobei die Lichtquelle (L) monolithisch integriert ist.

15. Photonenkomponente nach einem der Ansprüche 6 bis 14, wobei das mindestens eine optische Bauteil (LB) mit einem Reflektor (R) ausgerüstet ist, der auf dem Ausrichtungsweg angeordnet ist.

16. Photonenkomponente nach einem der Ansprüche 6 bis 15, wobei das mindestens eine optische Bauteil eine Zusammensetzung ist, umfassend den Faraday-Rotator und den Linsenblock.

17. Photonenkomponente nach einem der Ansprüche 6 bis 16, wobei der Photonenchip (1) konfiguriert ist zum Produzieren, an der Zone (Z) mit Ausrichtungsein-Ausgang, eines Bündels, das eine bestimmte Modengröße aufweist, und das mindestens eine optische Bauteil (LB) auf dem Photonenchip mit einer Präzision kleiner als oder gleich 10 % der bestimmten Modengröße zusammengesetzt ist.

## Claims

1. Method for assembling an optical part (LB) and a photonic chip (1), the optical part (LB) formed by a lens block provided with a plurality of lenses and forming a plurality of optical pathways to be aligned with a plurality of input-output regions (Z) which are arranged on a main face (1a) of the photonic chip (1), the assembly method comprising the following steps:
- providing the photonic chip (1) comprising at least one light source (L), at least one photodetector (PD) and, from the plurality of input-output regions (Z), at least one alignment input-output (Zc) which is optically associated with the at least one light source (L) and the at least one photodetector (PD) of the photonic chip (1);
- providing the optical part (LB), of which at least one alignment lens forms an alignment pathway selected from the plurality of optical pathways, the alignment pathway being intended to be matched with the at least one alignment input-output region (Zc) of the photonic chip (1), the at least one alignment lens being configured, when matched with the at least one alignment input-output, to reflect at least part of a light beam capable of being produced by the at least one light source (L) toward the at least one photodetector (PD);
- activating the at least one light source (L) of the photonic chip (1) to produce an alignment light beam at the at least one alignment input-output region (Zc) and to measure a signal provided by the at least one photodetector (PD) of the photonic chip (1);
- actively aligning the photonic chip (1) and the optical part (LB) relative to one another by using the measurement of the signal provided by the at least one photodetector (PD).

2. Assembly method according to the preceding claim, wherein the photonic chip (1) comprises a power supply pad (CA) and a measuring pad (CM) which are connected to the at least one light source (L) and to the at least one photodetector (PD), respectively, and the method comprises a step of contacting the power supply pad (CA) to activate the at least one light source (L) and of contacting the measuring pad (CM) to measure the signal provided by the at least one photodetector (PD) of the photonic chip (1).

3. Assembly method according to either of the preceding claims, wherein the at least one alignment lens comprises a reflector (R) which is arranged to reflect at least part of a light beam capable of being produced by the at least one light source (L) toward the at least one photodetector (PD) when the at least one alignment lens is matched with the at least one alignment input-output, the reflector advantageously comprises a layer of a reflective material which is deposited on the at least one alignment lens.

4. Assembly method according to any of the preceding claims, wherein a Faraday polarization rotator (FR) is arranged in an optical path of the alignment light beam between the photonic chip (1) and the reflector (R).

5. Assembly method according to any of the preceding claims, wherein the at least one light source (L) and the at least one photodetector (PD) are optically associated with the at least one alignment input-output (Zc) via at least one waveguide (GW; GW1, GW2) and an optical coupler (GC1; GC2) which is arranged at one end of at least one waveguide (GW; GW1, GW2).

6. Photonic component which comprises:
- a photonic chip (1) comprising a plurality of input-output regions (Z) which are arranged on a main face (1a), the photonic chip (1) comprising a light source (L), a photodetector (PD) and, from the plurality of input-outputs (Z), at least one alignment input-output (Zc) which is optically associated with the light source (L) and with the photodetector (PD) of the chip (1);
- at least one optical part (LB) which is arranged on the main face (1a), said optical part (LB) comprising a lens block provided with a plurality of lenses and forming a plurality of optical pathways which are each matched with an input-output (Z) of the plurality of input-output regions (Z), the photonic component being **characterized by** at least one alignment lens from the plurality of lenses matched with an optical pathway, which is referred to as an alignment pathway, the at least one alignment lens being configured to reflect at least part of a light beam capable of being produced by the light source (L) toward the photodetector (PD).

7. Photonic component according to the preceding claim, wherein the light source (L) and the photodetector (PD) are optically associated with the at least one alignment input-output (Zc) via at least one waveguide (GW; GW1, GW2) and at least one optical coupler (G1; GC2; GCa, GCb) which is arranged at one end of the at least one waveguide (GW; GW1, GW2).

8. Photonic component according to the preceding claim, wherein the at least one waveguide (GW) is a power splitter.

9. Photonic component according to claim 7, wherein the at least one optical coupler (GC2) is a polarization-separating surface optical coupler, and the photonic chip (1) comprises a first waveguide (GW1) between the photodetector (PD) and the polarization-separating surface optical coupler (GC2) and a second waveguide (GW2), which is separate from the first, between the light source (L) and the polarization-separating surface optical coupler (GC2).

10. Photonic component according to claim 7, wherein the photonic chip (1) comprises a first waveguide (GW1) between the light source (L) and a first optical coupler (GCa) and a second waveguide (GW2), which is separate from the first (GW1), between the photodetector (PD) and a second optical coupler (GCb).

11. Photonic component according to any of claims 6 to 10, wherein the photonic chip (1) comprises an electrical power supply pad (CA) to activate the light source (L) and a measuring pad (CM) to transfer the signal provided by the photodetector (PD).

12. Photonic component according to any of claims 6 to 11, wherein the photonic chip (1) comprises a plurality of alignment input-outputs (Zc).

13. Photonic component according to any of claims 6 to 12, wherein the main surface (1a) corresponds to an slice of the chip (1).

14. Photonic component according to any of claims 6 to 12, wherein the light source (L) is monolithically integrated.

15. Photonic component according to any of claims 6 to 14, wherein the at least one optical part (LB) is equipped with a reflector (R) which is arranged on the alignment pathway.

16. Photonic component according to any of claims 6 to 15, wherein the at least one optical part is an assembly comprising a Faraday rotator and the lens block.

17. Photonic component according to any of claims 6 to 16, wherein the photonic chip (1) is configured to produce, at the alignment input-output region (Z), a beam having a specified mode size, and the at least one optical part (LB) is assembled on the photonic chip with an accuracy of less than or equal to 10% of the specified mode size.
